# EUROPÄISCHE PATENTANMELDUNG

(11) **EP 3 135 456 A1**
(43) Veröffentlichungstag der Anmeldung: **01.03.2017**
(21) Anmeldenummer: 16181562.6
(22) Anmeldetag: 27.07.2016
(51) Int. Cl.: B29C 47/02, F16L 11/115, B29C 69/02, B29C 45/00

(54) **BAUEINHEIT MIT VON EINER AUSSENHÜLLE VERBUNDENEN INNENTEILEN UND VERFAHREN ZUR HERSTELLUNG DIESER**

(30) Priorität: 28.08.2015 DE 102015011095
(71) Anmelder: Berghahn, Jürgen, 4050 Traun (AT)
(72) Erfinder: Berghahn, Jürgen, 4050 Traun (AT)
(74) Vertreter: Fischer & Konnerth

(57) **Zusammenfassung**

Baueinheit, die aus zumindest zwei ringförmigen oder rohrartigen Innenteilen (2) gebildet ist, die fluchtend nebeneinander angeordnet und durch eine Außenhülle (8) miteinander verbunden sind,
dadurch gekennzeichnet,
dass die Innenteile (2) Kunststoff-Spritzgussteile sind und
dass die Außenhülle (8) aus auf die Innenteile (2) extrudiertem Kunststoff gebildet ist.

## Beschreibung

Die Erfindung betrifft eine Baueinheit, die aus zumindest zwei ringförmigen oder rohrartigen Innenteilen gebildet ist, die fluchtend nebeneinander angeordnet und durch eine Außenhülle miteinander verbunden sind, sowie ein Verfahren zur Herstellung einer Baueinheit aus zumindest zwei ringförmigen oder rohrartigen Innenteilen und einer Außenhülle.

Aus der DE 10 2009 016 951 B4 ist ein Förderschlauch bekannt geworden, der aus einer Innenlage aus keramischen Verschleißschutzringen, die mit einer Gummilage zusammenvulkanisiert sind, und einer als Festigkeitsträger gebildeten und mit der Innenlage fest verbundenen Deckschicht aufgebaut ist. Keramische Verschleißschutzringe sind zwar präzise herstellbar, aber sehr kostenaufwändig. Die Gummilage gestattet zwar eine gewisse Flexibilität des Förderschlauches, unterliegt aber vergleichsweise schneller Alterung und Versprödung.

Der Erfindung liegt die Aufgabe zugrunde, eine eingangs genannte Baueinheit zu schaffen, die hinsichtlich der Nachteile einer bekannten Baueinheit verbessert ist, sowie ein einfaches Verfahren zur Herstellung einer solchen Baueinheit anzugeben.

Die Aufgabe wird bei der eingangs genannten Baueinheit erfindungsgemäß dadurch gelöst, dass die Innenteile Kunststoff-Spritzgussteile sind und dass die Außenhülle aus auf die Innenteile extrudiertem Kunststoff gebildet ist.

Vorteilhafte Ausgestaltungen der Erfindung sind in den abhängigen Ansprüchen angegeben.

Die Innenteile sind als Kunststoff-Spritzgussteile in vielfältigen Gestaltungen und mit unterschiedlichen Kunststoffmaterialien für viele Einsatzzwecke herstellbar, wobei sie insbesondere in Gestaltungen herstellbar sind, die durch Profil-Extrusion grundsätzlich nicht herstellbar sind, wie dies auch bei bestimmten Hochleistungs-Kunststoffen der Fall ist. Solche Kunststoffmaterialien sind z. B. Hart-PVC, Weich-PVC, PET, PC, PMMA, ABS, PA6, PA6.6, PA12, POM, PBT, PE, PP, oder PS sowie faserverstärkte Polymere. Die Innenkontur der Innenteile kann durch Spritzgießen sehr exakt und mit hoher Präzision gefertigt werden.

Die Außenhülle, die aus einer Hüllschicht oder aus mehreren übereinander und/oder nebeneinander liegenden Hüllschichten gebildet wird, wird aus einem oder mehreren Kunststoffen in einem Extrusionsverfahren auf die Innenteile aufgebracht und mit diesen innig und fest verbunden. Die Außenhülle kann die Innenteile vollständig umschließen oder auch z. B. einen streifenförmigen Bereich am Umfang der Innenteile unbedeckt lassen. Kunststoffmaterialien für die Außenhülle sind ebenfalls z. B. Hart-PVC, Weich-PVC, PET, PC, PMMA, ABS, PA6, PA6.6, PA12, POM, PBT, PE, PP oder PS sowie faserverstärkte Polymere.

Günstig ist es, wenn die Kunststoffe des Innenringes und der Außenhülle eine ähnliche Molekülstruktur aufweisen, da dann eine besonders innige und feste Verbindung beider Kunststoffe, die insbesondere zumindest in ihren Kontaktbereichen im weichflüssigem Zustand sein können, erzielt werden kann.

Als ringförmige oder rohrartige Innenteile werden auch solche Teile bezeichnet, die an einer Seite geschlossen sind, um z. B. als abschließende oder geschlossene Endstücke einer ansonsten z. B. rohrförmigen oder kanalartigen Baueinheit verwendet zu werden.

Die Außenhülle kann sowohl einschichtig wie auch mehrschichtig mit zumindest einer inneren Hüllschicht und einer äußeren Hüllschicht gebildet sein. Bei mehrschichtigem Aufbau können die Hüllschichten in einem Extrusionsvorgang durch Koextrusion oder in aufeinander folgenden Extrusionen hergestellt werden.

Wenn die Außenhülle oder zumindest eine der Hüllschichten aus Weich-Kunststoff extrudiert ist, kann die Baueinheit eine gewisse Flexibilität aufweisen, so dass eine längere Baueinheit mit einer Vielzahl von Innenteilen z. B. in einen schlauchartigen an seinen Enden miteinander verbundenen Ring geformt werden kann.

Die Innenteile können aneinander angrenzend, teilweise überlappend oder voneinander beabstandet angeordnet sein. Die voranstehend genannte Flexibilität ist insbesondere bei voneinander beabstandet angeordneten Innenteilen gegeben, die sich einer Biegung der Baueinheit besser anpassen können. Bei teilweise überlappender Anordnung kann die Stoßstelle zwischen zwei aneinander angrenzenden Innenteilen überdeckt werden, so dass beim Extrudieren der Außenhülle Kunststoffmaterial zwischen die Innenteile nicht eindringen kann.

In bevorzugter Gestaltung ist vorgesehen, dass zumindest eines der Innenteile innenseitig eine Funktionsfläche oder eine Funktionsstruktur aufweist, die insbesondere als Führungs- oder Befestigungsfläche bzw. als Führungs- oder Befestigungsstruktur gebildet ist. Solche Funktionsflächen oder Funktionsstrukturen sind zum Erfüllen spezieller Aufgaben der Baueinheit durch das Spritzgießen exakt herstellbar. Dabei können die Funktionsflächen bzw. die Funktionsstrukturen am oder im Innenteil selbst geformt oder gebildet sein oder sie sind von zumindest einem am Innenteil durch weiteres Material angeformten oder angespritzten Funktionsteil gebildet. Innenteile mit solchen zusätzlichen Funktionsteilen oder Funktionsschichten können als 1-Komponenten-, als 2-Komponenten- oder auch als Mehr-Komponenten-Spritzgussteile in den entsprechenden 1 K-, 2K- oder Mehr-K-Spritzgussverfahren hergestellt werden. Damit können auch Funktionsstrukturen aus harten und verschleißfesten Kunststoffen wie z. B. aus glasfaserverstärktem Kunststoff angespritzt werden.

Die gesamte Baueinheit oder die Innenteile können beispielsweise einen kreisringförmigen, einen elliptischen oder einen rechteckigen Querschnitt aufweisen. Jedoch sind auch andere Querschnitte herstellbar. Die Außenhülle kann mit im Wesentlichen gleichmäßiger Schichtdicke oder mit sich über den Umfang ändernder Schichtdicke gebildet werden.

Zweckmäßigerweise kann eine Verbindungseinrichtung vorgesehen sein, die zwei benachbarte Innenteile miteinander verbindet. Die Verbindungseinrichtung kann lediglich zur gegenseitigen Positionierung wie auch zur festen gegenseitigen Verbindung zweier aneinander angrenzender Innenteile dienen. Hierdurch kann die Festigkeit der Baueinheit erhöht werden. Es ist aber auch möglich, zwei benachbarte Innenteile mit Abstand anzuordnen. Dabei werden die Innenteile mittels einer Vorrichtung getaktet in das Extrusionswerkzeug eingebracht.

Wenn die Außenhülle aus Weich-Kunststoff extrudiert ist, kann die Baueinheit eine gewisse Flexibilität und Biegbarkeit entlang ihrer Längsachse aufweisen, insbesondere wenn auch die Innenteile aus Weich-Kunststoff gebildet sind. Wenn dagegen die Außenhülle aus Hart-Kunststoff extrudiert ist, kann die Baueinheit starr und mit hohem Biegewiderstand gebildet werden. Bei einem mehrschichtigen Aufbau der Außenhülle können unterschiedliche Eigenschaften kombiniert werden.

Die Außenhülle kann mit über den Umfang gleichmäßiger Schichtdicke gebildet sein. Andererseits kann die Außenhülle auch mit sich über den Umfang ändernder Schichtdicke gebildet ist. Sich ändernde Schichtdicke bedeutet, dass auch z. B. ein schmaler Längsstreifen von der Außenhülle unbedeckt bleibt, so dass die Innenteile frei liegen.

Des Weiteren kann vorgesehen sein, dass die Außenhülle an ihrem Umfang mit einer Profilierung oder mit vorstehenden Rippen oder dergleichen gebildet ist. Eine Profilierung oder dergleichen kann die Handhabung erleichtern oder eine bestimmte Einbaulage anzeigen oder vorgeben. Die Außenhülle kann auch eine Funktionsstruktur aufweisen, z. B. zum Eingriff mit angrenzenden Bauteilen oder dergleichen.

In einer bevorzugten Gestaltung sind die Innenteile oder ein mit der Außenhülle versehener Ring des Innenteils aus Weich-Kunststoff gebildet und zumindest ein die Funktionsfläche bzw. die Funktionsstruktur bildender Innenteilabschnitt ist aus Hart-Kunststoff gebildet, insbesondere im 2K-Spritzgussverfahren.

Die Baueinheit kann als ein Schlauch oder ein Rohr gebildet sein, wobei jedes ringförmige Innenteil an seinem Innenumfang einen umlaufenden oder unterbrochenen wulstförmigen Innenteilabschnitt aufweisen kann, der die Funktionsfläche bzw. die Funktionsstruktur bildet und insbesondere aus Hart-Kunststoff hergestellt ist. Die Funktionsfläche kann auch von einer glatten insbesondere zylindrischen Innenfläche der Innenteile gebildet sein.

Zweckmäßigerweise kann die Baueinheit in ihrem Innenraum zumindest eine sich über zumindest zwei benachbarte Innenteile erstreckende durchgehende oder unterbrochene Funktionsfläche aufweisen. Die Funktionsfläche kann z. B. zum Abstützen oder Führen eines in der Baueinheit bewegbar aufgenommenen Teils oder zum Befestigen eines Teils dienen. Die Baueinheit kann demnach auch ein Gehäuse zur Aufnahme eines solchen an der Funktionsfläche bzw. der Funktionsstruktur anzubringenden Einbauteils sein.

Des Weiteren kann die Baueinheit ein schlauchartiges Sport- oder Trainingsgerät sein und sie kann zumindest einen in ihrem Inneren insbesondere spielfrei aufgenommenen und darin bewegbaren Körper wie z. B. eine Kugel enthalten. Wenn Funktionsflächen bzw. Funktionsstrukturen im Inneren der Innenteile aus Hart-Kunststoff gebildet sind, wird Verschleiß durch Reibung des sich an den Innenteilen bewegenden Körpers vorgebeugt.

Die Aufgabe wird auch durch ein Verfahren mit den Merkmalen des Anspruchs 17 mit den folgenden Schritten gelöst:
a. Zuführen von zumindest zwei als Kunststoff-Spritzgussteile hergestellten Innenteilen in fluchtender Anordnung zu einem Kunststoff-Extruder,
b. Aufbringen der Kunststoff-Außenhülle mittels Extrusion auf die Innenteile und
c. Kalibrieren der erhaltenen Baueinheit auf einer nachgeordneten Kalibrier- oder Kühleinheit,
wobei erfindungsgemäß vorgesehen ist,
dass zur Haftverbesserung des Kunststoffes der Kunststoff-Außenhülle auf den Innenteilen
- vor dem Schritt b. zumindest ein Außenbereich der Innenteile auf eine erhöhte Verarbeitungstemperatur, insbesondere im Bereich von 120°C bis 250°C, erwärmt wird und/oder
- dass als Kunststoff des Innenteils ein haftungsmodifizierter Kunststoff verwendet wird.

Ein Vorteil des erfindungsgemäßen Verfahrens liegt darin, dass eine innige Verbindung der Außenhülle mit den Innenteilen hergestellt werden kann, wobei eine Innenstruktur der durch Spritzguss hergestellten Innenteile präzise herstellbar ist und bei dem Extrudieren der Außenhülle in ihrer Qualität unverändert bleibt.

Zweckmäßigerweise erfolgt das Erwärmen des Außenbereichs der Innenteile am oder vor dem Kunststoff-Extruder, insbesondere mittels eines Heißluftgebläses. Die Erwärmung erfolgt demnach am oder kurz vor dem Kunststoff-Extruder, wobei die bevorzugte Position für die Erwärmung z. B. von der Zuführgeschwindigkeit der Innenteile zum Kunststoff-Extruder abhängt.

Bevorzugt wird der Außenbereich der Innenteile auf eine erhöhte Verarbeitungstemperatur im Bereich von 120°C bis 250°C erwärmt, wobei die bevorzugte Temperatur von dem verwendeten Kunststoff oder Thermoplast-Kunststoff abhängt. Bei Verwendung eines haftungsmodifizierten Kunststoffes kann auf eine Erwärmung, die zusätzlich zu der beim Extrudieren auftretenden Erwärmung erzeugt wird, verzichtet werden. Ein solcher haftungsmodifizierter Kunststoff ist z. B. ein thermoplastisches Elastomer wie beispielsweise KRAIBURG TPE THERMOLAST® K TF6CGT, FC-Serie.

Nachfolgend wird die Erfindung anhand von Ausführungsbeispielen erfindungsgemäßer Baueinheiten unter Bezugnahme auf die Zeichnung näher erläutert. Es zeigt:
- Fig. 1: in einer Längsschnittansicht ein erstes Ausführungsbeispiel einer erfindungsgemäßen Baueinheit;
- Fig. 2: in einer perspektivischen Ansicht ein Innenteil der in Fig. 1 dargestellten Baueinheit;
- Fig. 3: in einer perspektivischen Ansicht ein Innenteil eines zweiten Ausführungsbeispiels einer erfindungsgemäßen Baueinheit;
- Fig. 4: in einer Seitenansicht mehrere aneinander angeordnete Innenteile der Fig. 3
- Fig. 5: in einer weiteren Seitenansicht die Innenteile der Fig. 4;
- Fig. 6: in einer schematischen Ansicht eine Vorrichtung zur Herstellung einer erfindungsgemäßen Baueinheit;
- Fig. 7: in einer schematischen Ansicht eine weitere Vorrichtung zur Herstellung einer erfindungsgemäßen Baueinheit;
- Fig. 8: in einer Längsschnittansicht ein weiteres Ausführungsbeispiel einer erfindungsgemäßen Baueinheit;
- Fig. 9: in einer perspektivischen Ansicht ein Innenteil der in Fig. 8 dargestellten Baueinheit;
- Fig. 10: in einer Querschnittansicht ein weiteres Ausführungsbeispiel einer erfindungsgemäßen Baueinheit;
- Fig. 11: in einer Querschnittansicht ein weiteres Ausführungsbeispiel einer erfindungsgemäßen Baueinheit;
- Fig. 12: in einer Längsschnittansicht ein weiteres Ausführungsbeispiel einer erfindungsgemäßen Baueinheit; und
- Fig. 13: in einer perspektivischen Ansicht ein Innenteil der in Fig. 12 dargestellten Baueinheit.

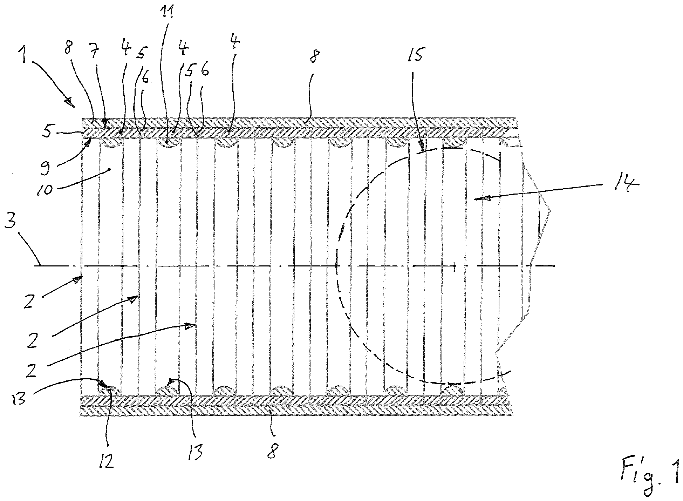

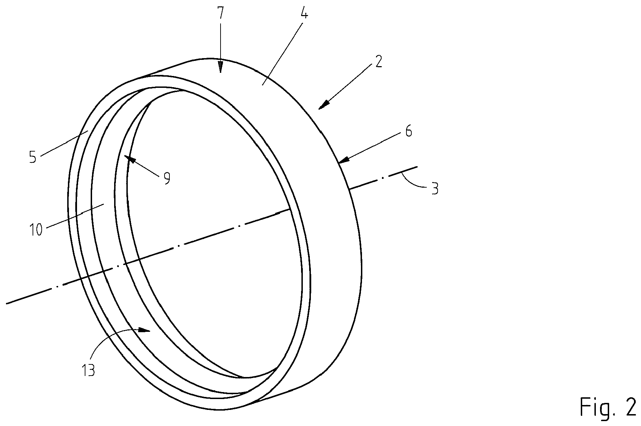

Eine erfindungsgemäße Baueinheit 1 (siehe Fig. 1) enthält mehrere gleichartige ringförmige Innenteile 2 (Fig. 2), die koaxial zu einer Längsachse 3 der Baueinheit 1 nebeneinander und aneinander angrenzend angeordnet sind. Jedes Innenteil 2 weist einen z. B. kreisrunden Ring 4 mit einem beispielsweise flachen rechteckigen Querschnitt auf, dessen beide Stirnseiten 5 und 6 an den Stirnseiten eines jeweils angrenzenden weiteren Rings 4 bzw. Innenteils 2 anliegen. Die Ringe 4 der Innenteile 2 sind an ihren Außenumfangsflächen 7 mit einer Außenhülle 8 umgeben, die mit den Ringen 4 der Innenteile 2 fest verbunden ist.

Die Innenteile 2 sind Kunststoff-Spritzgussteile, wobei der jeweilige Ring 4 z. B. aus Weich-Kunststoff und insbesondere aus Weich-PVC gebildet ist. Jedes Innenteil 2 kann an der Innenfläche 9 des Rings 4 einen Innenteilabschnitt 10 aufweisen, der eine Funktionsstruktur bildet und insbesondere aus Hart-Kunststoff wie z. B. Hart-PVC gebildet ist. Der Innenteilabschnitt 10 ist als ringförmiger wulstartiger Streifen gebildet, dessen Querschnitt z. B. in Form eines Kreissegments 11 gebildet ist und der insbesondere in einem 2-Komponenten-Spritzgussverfahren (2K-Spritzgussverfahren) an der Innenfläche 9 des Ringes 4 in axialer Richtung in etwa mittig zwischen den beiden Stirnflächen 5 und 6 angespritzt ist. Die Breite der Innenteilabschnitte 10 beträgt z. B. etwa 1/3 der Breite des Innenteils 2.

Die Außenhülle 8 ist aus einem Kunststoff und insbesondere aus einem Weich-Kunststoff wie z. B. Weich-PVC hergestellt und auf die Außenumfangsflächen 7 der Innenteile 2 extrudiert, so dass eine feste Verbindung zwischen der Außenhülle 8 und den Ringen 4 der Innenteile 2 hergestellt ist. Beim Extrudieren des Weich-Kunststoffes als Außenhülle 8 auf die Ringe 4 wird der Weich-Kunststoff der Ringe 4 an deren Außenumfangsfläche 7 auf in Abhängigkeit von der Art des Weich-Kunststoffes z. B. 120°C bis 250°C erwärmt, so dass eine besonders innige und fest haltende stoffschlüssige Verbindung des Weich-Kunststoffes der Ringe 4 mit dem Weich-Kunststoff der aufextrudierten Außenhülle 8 hergestellt wird.

Die rohr- oder schlauchförmige Baueinheit 1 kann aufgrund der flexiblen und elastischen Materialeigenschaften des Weich-Kunststoffes der Außenhülle 8 wie auch des Weich-Kunststoffes der Ringe 4 des Innenteils 2 biegbar sein, wobei aber auch eine starre Gestaltung grundsätzlich möglich ist.

Die Innenteilabschnitte 10 mit ihren Funktionsstrukturen 12 aus härterem Kunststoff bilden in axialer Richtung unterbrochene Funktionsflächen 13 eines rohr- oder schlauchförmigen Kanals 14 im Inneren der Baueinheit 1. Im Inneren der Baueinheit 1 bzw. des Kanals 14 kann zumindest ein Bewegungskörper 15 aufgenommen sein, der z. B. als Kugel mit einem Durchmesser gebildet ist, der eine von den Innenteilabschnitten 10 begrenzte im wesentlichen spielfreie axiale Bewegung im rohr- oder schlauchförmigen Kanal 14 gestattet. Die Kugel ist z. B. aus einem harten verschleißfesten Material wie Hartkunststoff oder Metall, insbesondere Stahl, gebildet. Die Kugel kann sich im rohr- oder schlauchförmigen Kanal 14 entlang bewegen und ist dabei nur mit den vergleichsweise harten und verschleißfesten Funktionsflächen 13 der Funktionsstrukturen 12 der Innenteilabschnitte 10 in Führungskontakt. Auch nach vielen Bewegungsvorgängen einer oder mehrerer solcher Kugeln in dem Kanal 14 bleibt dennoch der Verschleiß an den Innenteilabschnitten 10 gering im Vergleich mit einem Innenteilabschnitt aus einem weichen Kunststoff, der höherem Abrieb und Verschließ im Kontakt mit Bewegungskörpern 15 ausgesetzt ist.

Bewegungskörper 15 können auch zylindrische Körper mit einem geringfügig kleineren Durchmesser als der Innendurchmesser der Innenteilabschnitte 10 sein. Grundsätzlich können sich die Bewegungskörper aufgrund von Schwerkraft in einer zur Horizontalen geneigten Baueinheit 1 abwärts bewegen. Die Bewegungskörper können aber auch durch ein Antriebsmittel wie Druckluft oder Wasser in dem Kanal 14 der Baueinheit 1 bewegt werden.

Die Baueinheit 1 ist insbesondere als Schlauch gebildet, der z. B. an seinen beiden Enden geschlossen ist oder dessen beiden Enden unter Bildung eines Schlauchringes miteinander verbunden sind, so dass ein durchgehender endloser Kanal 14 gebildet ist. Im Schlauch enthaltene insbesondere schwere Kugeln oder dergleichen können durch manuelles Bewegen des Schlauches Reaktionskräfte auf eine Benutzerperson ausüben und somit als Bewegungs- oder Krafttrainingsgerät dienen. Zur Verbindung der beiden Enden können die beiden endseitigen Innenteile 2 derart gebildet sein, dass das eine Innenteil in das andere Innenteil kupplungsartig einschiebbar ist, wobei die Innenstruktur bzw. die Funktionsflächen 13 und Funktionsstrukturen 12 der beiden Innenteile 2 im wesentlichen beibehalten wird bzw. werden. Die beiden Schlauchenden können in einen Griffteil, das als zusätzliches Spritzgussteil gebildet ist, eingeschoben und verklebt oder verschraubt sein.

Grundsätzlich können die Innenteile 2 als Kunststoff-Spritzgussteile in vielfältiger Gestaltung hergestellt werden, wobei die Formen und die Abmessungen beim Spritzgießen mit hoher Präzision gefertigt werden können und auch Formen hergestellt werden können, die durch Extrudieren nicht herstellbar sind.

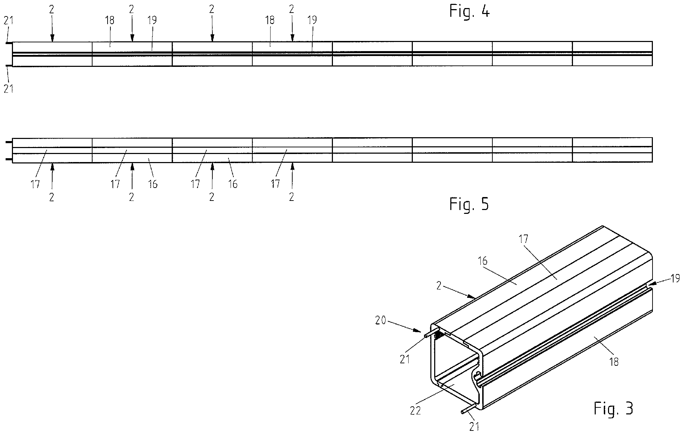

Ein weiteres Ausführungsbeispiel einer erfindungsgemäßen Baueinheit enthält Innenteile 2 (siehe Fig. 3), die als Kunststoff-Spritzgussteile mit z. B. rechteckigem oder quadratischem rohrförmigem Querschnitt hergestellt sind. Eine Wand 16 der vier Wände des Innenteils 2 enthält z. B. einen über die Länge des Innenteils 2 verlaufenden Streifen 17, der gegenüber der Wand 16 abweichend gebildet ist, z. B. aus einem farblich abweichenden Kunststoff oder aus einem transparenten Kunststoff. Das den Streifen 17 aufweisende Innenteil 2 ist mittels 2K-Spritzgießen hergestellt. Die Fig. 4 und 5 zeigt mehrere Innenteile 2, die vor dem Aufextrudieren einer Außenhülle fluchtend aneinander gereiht dargestellt sind, wobei sich die jeweiligen Streifen 17 durchgehend über die gesamte Anordnung der Innenteile 2 erstrecken. Selbstverständlich können auch Innenteile 2 ohne einen derartigen Streifen 17 mittels einer Außenhülle zu einer Baueinheit 1 miteinander verbunden werden.

Eine weitere Wand 18 des Innenteils 2 kann mit einer Funktionsstruktur 19 gebildet sein, die als außenseitige rinnen- oder nutförmige Vertiefung gebildet ist (siehe auch Fig. 4).

Ein solches Innenteil 2 kann eine Verbindungseinrichtung 20 aufweisen, um zwei aneinander angrenzende Innenteile 2 zueinander definiert zu positionieren, bevor die Außenhülle 8 aufextrudiert wird. Die Verbindungseinrichtung 20 enthält z. B. zwei Stifte 21, die an einer Stirnseite einer oder mehrere Wände 16 des Innenteils 2 axial hervorstehen und zum Eingriff an zugeordneten Vertiefungen oder Bohrungen (nicht dargestellt) in den Wänden am gegenüberliegenden Ende des benachbarten Innenteils 2 vorgesehen sind. Die Verbindungseinrichtung 20 bzw. die Stifte 21 können sowohl zum gegenseitigen Positionieren wie auch zum festen Verbinden zweier Innenteile 2 gebildet sein.

Durch das Spritzgießen kann auch zumindest eine Funktionsfläche 22 wie auch eine Funktionsstruktur im Inneren des Innenteils 2 mit hoher Präzision hergestellt werden.

Zur Herstellung einer erfindungsgemäßen Baueinheit 1 wird auch hier eine ein- oder mehrschichtige Außenhülle 8 als die Innenteile 2 verbindende Deckschicht auf die aneinander gereihten Innenteile 2 aufextrudiert. Die Außenhülle kann die Innenteile 2 vollständig umschließen - vergleichbar der in Fig. 1 dargestellten Baueinheit 1 - oder sie lässt die Bereiche der Wände, an denen Streifen 17 oder Funktionsstrukturen 19 gebildet sind, frei und unbedeckt. Andererseits kann die Außenhülle im Bereich des insbesondere transparenten Streifens 17 mit gleichfalls transparentem Kunststoff extrudiert werden, so dass eine optische Transparenz der Wand 16 an der Stelle des Streifens 17 erhalten bleibt.

Die Funktionsstruktur 19 kann z. B. zum außenseitigen Anbringen von Zusatzteilen dienen, während an den innenseitigen Funktionsflächen 22 Zusatzteile wie z. B. optische Messeinrichtungen angebracht werden können, die durch die transparenten Streifen 17 optischen Kontakt nach außen halten können. Demnach kann eine solche starre Baueinheit 1 z. B. als Messgerätehalterung oder auch als Leuchte mit einer innenliegenden Leuchteinrichtung verwendet werden.

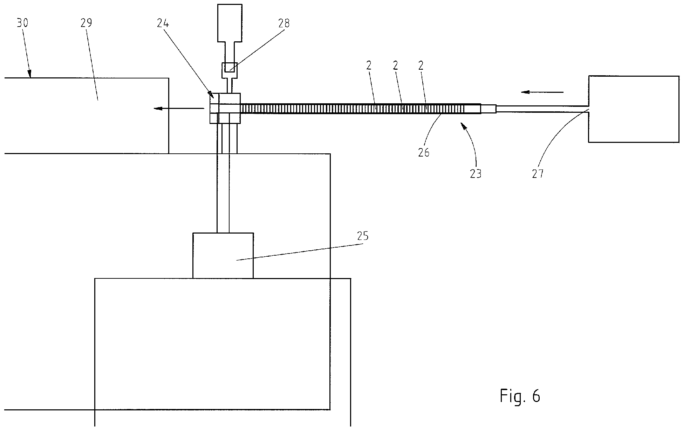

Fig. 6 zeigt in schematischer Darstellung eine Vorrichtung zur Herstellung einer Baueinheit 1. Durch Spritzgießen vorgefertigte Innenteile 2 werden mittels einer Zuführeinrichtung 23 einem Extrusionskopf 24 eines Kunststoff-Extruders 25 zugeführt. Die Zuführeinrichtung 23 enthält z. B. eine Rinne 26, in der eine Anzahl von Innenteilen 2 zum Herstellen einer Baueinheit 1 aneinander gereiht aufgenommen sind. Eine Schubeinrichtung 27 schiebt diese Innenteile 2 zum Extrusionskopf 24 und durch diesen hindurch, während die Außenhülle 8 auf die Innenteile 2 extrudiert wird. Die Innenteile 2 werden am oder im Extrusionskopf 24 an ihren Außenumfangsflächen oder Außenbereichen, an denen die Außenhülle 8 aufextrudiert werden soll, mittels einer Heizeinrichtung 28 auf eine solche Temperatur erwärmt, dass sich ihr in einer dünnen Außenschicht erweichter oder aufgeschmolzener Kunststoff mit dem im Extrusionskopf 24 extrudierten Kunststoff der Außenhülle 8 innig verbinden kann. Die Innenteile 2 werden auf eine Temperatur von z. B. 120°C bis 250°C erwärmt, wobei die bevorzugte Temperatur von der Art des Thermoplast-Kunststoffs abhängt. Auf eine solche Erwärmung mittels einer Heizeinrichtung kann verzichtet werden, insbesondere wenn ein haftungsmodifizierter und haftungsverbesserter Kunststoff verwendet wird.

Die Innenteile 2, die mittels einer von der Außenhülle 8 gebildeten Thermoplast-Deckschicht miteinander verbunden sind, werden einer Kühlstrecke 29 einer Kalibriereinrichtung 30 zugeführt und beim Durchlaufen dieser Kühlstrecke 29, in der sie z. B. mit Kühlflüssigkeit besprüht werden, abgekühlt und kalibriert. Die durch Spritzgießen mit hoher Präzision vorgefertigten Abschnitte der Innenteile 2, wie z. B. die Innenteilabschnitte 10, werden bei diesem Extrudieren nicht verändert bzw. in ihrer Qualität nicht beeinträchtigt.

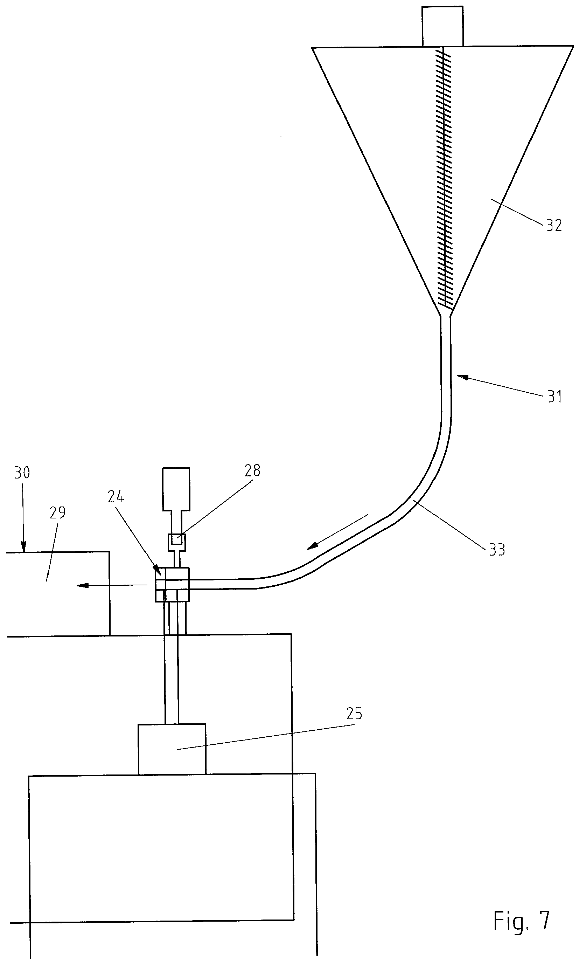

Die in Fig. 7 dargestellte Vorrichtung enthält in Abänderung der Vorrichtung der Fig. 6 eine Zuführeinrichtung 31 mit einer trichterförmigen Befüllstation 32 für Innenteile 2, aus der die Innenteile 2 über eine Rohrleitung 33 in korrekter Aneinanderreihung zum Extrusionskopf 24 und durch diesen hindurch bewegt werden, wobei auch eine nicht dargestellte Transport- oder Schubeinrichtung vorgesehen sein kann.

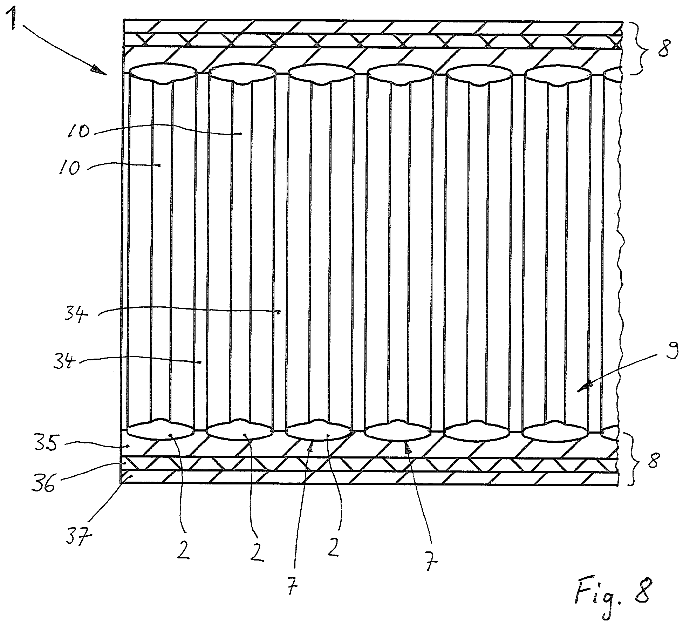

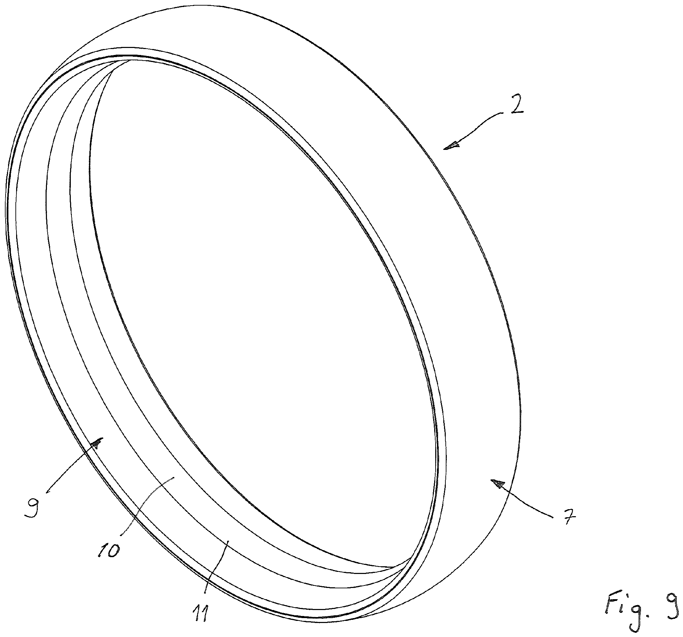

Eine Baueinheit 1, die als weiteres erfindungsgemäßes Ausführungsbeispiel in den Fig. 8 und 9 dargestellt ist, unterscheidet sich von der in den Fig. 1 und 2 dargestellten Baueinheit 1 dadurch, dass die als kreisrunde Ringe 4 gebildeten Innenteile 2 jeweils mit geringem axialem Abstand 34 voneinander angeordnet sind. Die Außenhülle 8 ist mehrschichtig aufextrudiert und enthält eine innere Hüllschicht 35, die unmittelbar auf die Innenteile 2 extrudiert ist, sowie eine mittlere Hüllschicht 36 und eine äußere Hüllschicht 37. Die innere Hüllschicht 35 ist bevorzugt aus einem weichen haftungsmodifizierten oder klebrigen Kunststoff wie z. B. KRAIBURG TPE THERMOLAST® K TF6CGT, FC-Serie hergestellt, der eine gute Haftfähigkeit auf den Innenteilen 2 bietet. Die mittlere Hüllschicht 36 besteht z. B. aus einem gegenüber der inneren Hüllschicht 35 härteren weniger flexiblen Kunststoff, dient als Trägerschicht für die Festigkeit der Baueinheit 1 und ihre Dicke beträgt z. B. nur etwa die Hälfte der Dicke der inneren Hüllschicht 35. Die äußere Hüllschicht 37 besteht z. B. aus einem weichen Kunststoff, z. B. mit einer Shore-Härte A 70, und ihre Dicke entspricht beispielsweise in etwa derjenigen der mittleren Hüllschicht 36.

Jedes Innenteil 2 ist als kreisrunder Ring mit einem flachen in etwa elliptischen Querschnitt gebildet. Die die Innenteile 2 unmittelbar bedeckende innere Hüllschicht 35 der mehrschichtigen Außenhülle 8 füllt den Abstand 34 zwischen jeweils zwei Innenteilen 2 von außen her etwa bis zur engsten Stelle zwischen diesen beiden Innenteilen 2 aus. Jedes Innenteil 2 weist an seiner Innenfläche 9 einen Innenteilabschnitt 10 auf, der als ringförmiger wulstartiger Streifen gebildet ist. Sein Querschnitt ist z. B. in Form eines Ellipsenabschnitts 11 gebildet. Der Innenteilabschnitt 10 ist bevorzugt aus Hart-PVC gebildet und insbesondere in einem 2-Komponenten-Spritzgussverfahren (2K-Spritzgussverfahren) an der Innenfläche 9 des z. B. aus Weich-PVC gebildeten Innenteils 2 in axialer Richtung in etwa mittig zwischen den beiden stirnseitigen Enden angespritzt. Die Breite des Innenteilabschnitts 10 beträgt z. B. etwa 1/4 bis 1/3 der Breite des Innenteils 2.

Durch den mehrschichtigen Aufbau der Außenhülle 8 kann ein geeigneter Schichtaufbau individuell hergestellt werden, der besondere Eigenschaft wie Widerstandsfähigkeit und Flexibilität durch Kombination der einzelnen Schichteigenschaften aufweist.

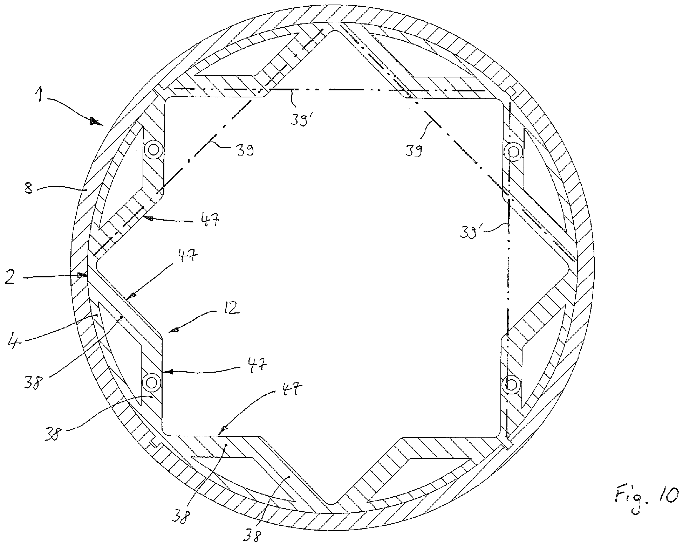

Fig. 10 zeigt ein weiteres Ausführungsbeispiel, bei dem das Innenteil 2 der Baueinheit 1 einen äußeren Ring 4 und innenseitig eine Funktionsstruktur 12 aufweist, die von mehreren Wandabschnitten 38 gebildet ist, die vom Ring 4 schräg einwärts verlaufen und in symmetrischer Anordnung über den Innenumfang des Innenteils 2 verteilt angeordnet sind und sich entlang von vier Kreissehnen 39, die ein Quadrat definieren, und entlang von vier Kreissegment 39', die gleichfalls ein Quadrat definieren, erstrecken. Die Wandabschnitte 38 können ein eingesetztes Funktionsbauteil wie z. B. eine Antriebswelle für eine rotatorisch anzutreibende Baueinheit 1 lagern, wobei ein Funktionsbauteil mit quadratischem Umfang in Umfangsrichtung in unterschiedlicher Positionierung aufgenommen werden kann und dann in Formschluss drehfest angeordnet ist. Jedoch können an den Wandabschnitten 38 bzw. den Funktions- oder Wandflächen 47 auch anders gestaltete Funktionsbauteile geführt oder befestigt werden. Die Länge einer Wandfläche 47 in Richtung der Kreissehnen 39 bzw. 39' beträgt z. B. 10 cm. Die Außenhülle 8 ist beispielsweise einschichtig gebildet.

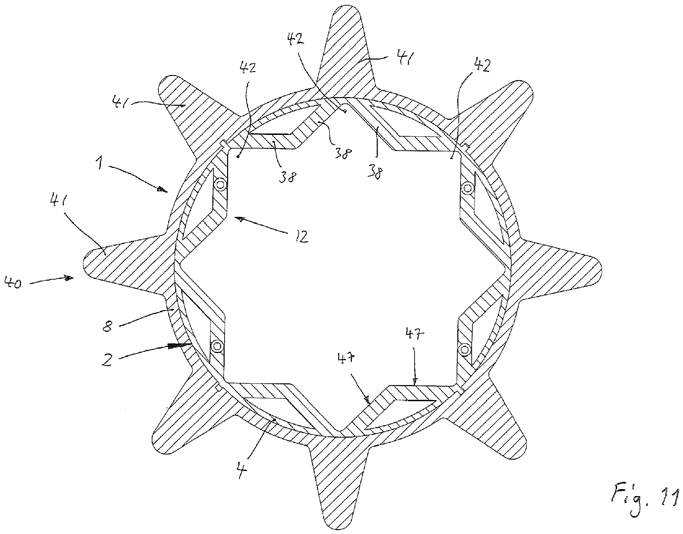

Fig. 11 zeigt eine Abwandlung der Baueinheit 1 der Fig. 10. Die Außenhülle 8 der Baueinheit 1 weist eine Funktionsstruktur 40 mit mehreren über den Umfang verteilten radial vorstehenden Rippen 41 auf, die in ihrer Anordnung an die innere Funktionsstruktur 12 angepasst sein können. So sind die Rippen 41 jeweils den Eckbereichen 42 der beiden Quadrate zugeordnet, die von jeweils zwei Wandabschnitten 38 gebildet sind. Die Rippen 41 können aus dem Kunststoffmaterial der Außenhülle 8 gebildet sein oder aus einem anderen Kunststoff extrudiert sein.

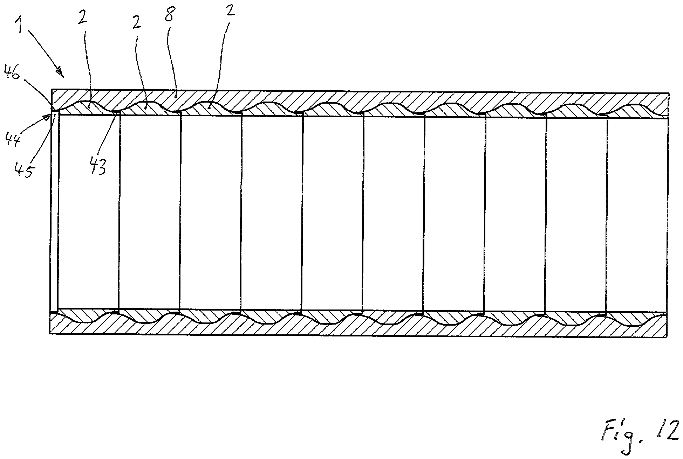

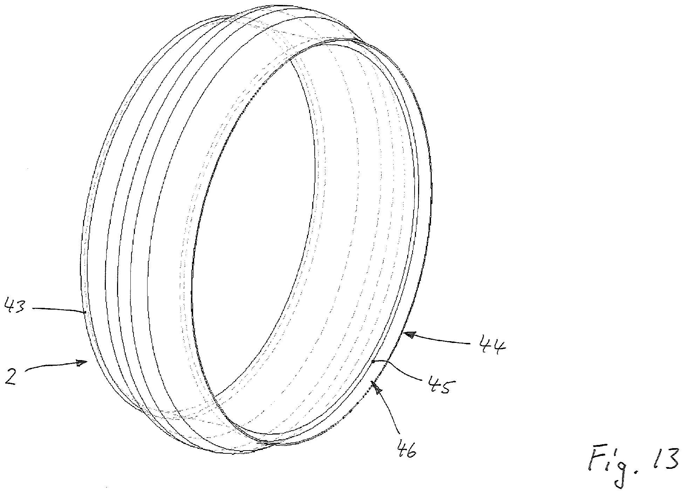

Bei dem in Fig. 12 dargestellten Ausführungsbeispiel enthält die Baueinheit 1 ringförmige Innenteile 2 (siehe Fig. 13), die axial aneinander anliegen. Jedes Innenteil 2 weist axial auf einer Seite einen Endabschnitt 43 mit einer schmalen Stirnfläche auf. An seiner axial gegenüber liegenden Seite enthält das Innenteil 2 einen Endabschnitt 44 mit einem inneren Absatz oder einer Aussparung 45, in die der gegenüberliegende Endabschnitt 43 des angrenzenden Innenteils 2 eingesetzt ist. Der die Aussparung 45 enthaltende Endabschnitt 44 läuft in der Art einer Lippe 46 aus, die auf dem eingesetzten Endabschnitt 43 dicht aufliegt und die Stoßstelle zwischen den beiden Innenteilen 2 nach außen hin abdeckt. Die Innenteile 2 bilden mit ihren Innenflächen 9 einen zylindrischen Innenquerschnitt, der eine insbesondere glattflächige Funktionsfläche 13 bildet. Die Außenumfangsfläche 7 der Innenteile 2 ist ausgebaucht, so dass die gesamte Außenfläche der Innenteile 2 im Querschnitt in etwa wellenförmig verläuft. Die Außenhülle 8 ist aus einem Thermoplast einschichtig auf die Innenteile extrudiert.

An der glattflächigen zylindrischen Funktionsfläche können z. B. Kugeln gleiten, wenn die Baueinheit ein ringförmiges Sportgerät bildet.

Die in der Beschreibung und anhand der Ausführungsbeispiele sowie in den Figuren offenbarten einzelnen Merkmale der Erfindung können in beliebigen technisch zweckmäßigen Anordnungen und Gestaltungen mit dem Erfindungsgegenstand in seiner allgemeinen Form kombiniert werden.

**Bezugszeichenliste**

| | | | |
|---|---|---|---|
| 1 | Baueinheit | 26 | Rinne |
| 2 | Innenteil | 27 | Schubeinrichtung |
| 3 | Längsachse | 28 | Heizeinrichtung |
| 4 | Ring | 29 | Kühlstrecke |
| 5 | Stirnseite | 30 | Kalibriereinrichtung |
| 6 | Stirnseite | 31 | Zuführeinrichtung |
| 7 | Außenumfangsfläche | 32 | Befüllstation |
| 8 | Außenhülle | 33 | Rohrleitung |
| 9 | Innenfläche | 34 | Abstand |
| 10 | Innenteilabschnitt | 35 | innere Hüllschicht |
| 11 | Kreissegment | 36 | mittlere Hüllschicht |
| 12 | Funktionsstruktur | 37 | äußere Hüllschicht |
| 13 | Funktionsfläche | 38 | Wandabschnitt |
| 14 | Kanal | 39 | Kreissehne |
| 15 | Bewegungskörper | 39' | Kreissehne |
| 16 | Wand | 40 | Funktionsstruktur |
| 17 | Streifen | 41 | Rippe |
| 18 | Wand | 42 | Eckbereich |
| 19 | Funktionsstruktur | 43 | Endabschnitt |
| 20 | Verbindungseinrichtung | 44 | Endabschnitt |
| 21 | Stift | 45 | Aussparung |
| 22 | Funktionsfläche | 46 | Lippe |
| 23 | Zuführeinrichtung | 47 | Funktions- oder Wandfläche |
| 24 | Extrusionskopf | | |
| 25 | Kunststoff-Extruder | | |

## Patentansprüche

1. Baueinheit, die aus zumindest zwei ringförmigen oder rohrartigen Innenteilen (2) gebildet ist, die fluchtend nebeneinander angeordnet und durch eine Außenhülle (8) miteinander verbunden sind,
**dadurch gekennzeichnet,**
**dass** die Innenteile (2) Kunststoff-Spritzgussteile sind und
**dass** die Außenhülle (8) aus auf die Innenteile (2) extrudiertem Kunststoff gebildet ist.

2. Baueinheit nach Anspruch 1,
**dadurch gekennzeichnet, dass** die Außenhülle (8) mehrschichtig mit zumindest einer inneren Hüllschicht (35) und einer äußeren Hüllschicht (37) gebildet ist.

3. Baueinheit nach Anspruch 1 oder 2,
**dadurch gekennzeichnet, dass** die Außenhülle (8) oder zumindest eine der Hüllschichten aus Weich-Kunststoff extrudiert ist.

4. Baueinheit nach einem der Ansprüche 1 bis 3,
**dadurch gekennzeichnet, dass** die Innenteile (2) aneinander angrenzend, teilweise überlappend oder voneinander beabstandet angeordnet sind.

5. Baueinheit nach einem der Ansprüche 1 bis 4,
**dadurch gekennzeichnet, dass** zumindest eines der Innenteile (2) innenseitig eine Funktionsfläche (13, 22) oder eine Funktionsstruktur (12, 19) aufweist, die insbesondere als Führungs- oder Befestigungsfläche bzw. als Führungs- oder Befestigungsstruktur gebildet ist.

6. Baueinheit nach Anspruch 5,
**dadurch gekennzeichnet, dass** die Funktionsfläche (22) bzw. die Funktionsstruktur (19) am Innenteil (2) geformt ist oder von einem am Innenteil (2) angeformten oder angespritzten Funktionsteil (12) gebildet ist.

7. Baueinheit nach einem der Ansprüche 1 bis 6,
**dadurch gekennzeichnet, dass** die Baueinheit (1) bzw. die Innenteile (2) einen kreisringförmigen, elliptischen oder rechteckigen Querschnitt aufweist bzw. aufweisen.

8. Baueinheit nach einem der Ansprüche 1 bis 7,
**dadurch gekennzeichnet, dass** eine Verbindungseinrichtung (20) vorgesehen ist, die zwei benachbarte Innenteile (2) miteinander verbindet.

9. Baueinheit nach einem der Ansprüche 5 bis 8,
**dadurch gekennzeichnet, dass** die Innenteile (2) aus Weich-Kunststoff gebildet sind und der die Funktionsfläche (13) bzw. die Funktionsstruktur (12) bildende Innenteilabschnitt (10) aus Hart-Kunststoff gebildet ist, insbesondere im 2K-Spritzgussverfahren.

10. Baueinheit nach einem der Ansprüche 1 bis 9,
**dadurch gekennzeichnet, dass** die Außenhülle (8) mit über den Umfang gleichmäßiger Schichtdicke oder mit sich über den Umfang ändernder Schichtdicke gebildet ist.

11. Baueinheit nach einem der Ansprüche 1 bis 10,
**dadurch gekennzeichnet, dass** die Außenhülle (8) an ihrem Umfang mit einer Funktionsstruktur (40), einer Profilierung oder mit vorstehenden Rippen (41) gebildet ist.

12. Baueinheit nach einem der Ansprüche 1 bis 7,
**dadurch gekennzeichnet, dass** die Baueinheit (1) ein Schlauch oder ein Rohr ist und dass jedes ringförmige Innenteil (2) an seinem Innenumfang (9) einen umlaufenden oder unterbrochenen wulstförmigen Innenteilabschnitt (10) aufweist, der die Funktionsfläche (13) bzw. die Funktionsstruktur (12) bildet und insbesondere aus Hart-Kunststoff hergestellt ist.

13. Baueinheit nach einem der Ansprüche 1 bis 12,
**dadurch gekennzeichnet, dass** die Baueinheit (1) in ihrem Innenraum (14) zumindest eine sich über zumindest zwei benachbarte Innenteile (2) erstreckende durchgehende oder unterbrochene Funktionsfläche (13, 22) oder Funktionsstruktur (12) aufweist.

14. Baueinheit nach einem der Ansprüche 1 bis 13,
**dadurch gekennzeichnet, dass** die Baueinheit (1) ein Gehäuse zur Aufnahme eines an der Funktionsfläche (13) bzw. der Funktionsstruktur (12) anzubringenden Einbauteils ist.

15. Baueinheit nach einem der Ansprüche 1 bis 14,
**dadurch gekennzeichnet, dass** sie ein schlauchartiges Sport- oder Trainingsgerät ist und zumindest einen in ihrem Inneren insbesondere spielfrei aufgenommenen und darin bewegbaren Bewegungskörper (15) enthält.

16. Schlauchförmiges Sport- oder Trainingsgerät, das aus einer Baueinheit nach einem der Ansprüche 1 bis 15 gebildet ist und zumindest einen im Inneren der Baueinheit insbesondere spielfrei aufgenommenen und darin längs bewegbaren Bewegungskörper (15) enthält.

17. Verfahren zur Herstellung einer Baueinheit aus zumindest zwei ringförmigen oder rohrartigen Innenteilen und einer Außenhülle mit den Schritten:
a. Zuführen von zumindest zwei als Kunststoff-Spritzgussteile hergestellten Innenteilen (2) in fluchtender Anordnung zu einem Kunststoff-Extruder (25),
b. Aufbringen der Kunststoff-Außenhülle (8) mittels Extrusion auf die Innenteile (2) und
c. Kalibrieren der erhaltenen Baueinheit (1) in einer nachgeordneten Kalibrier- oder Kühleinheit,
**dadurch gekennzeichnet,**
**dass** zur Haftverbesserung des Kunststoffes der Kunststoff-Außenhülle (8) auf den Innenteilen (2)
- vor dem Schritt b. zumindest ein Außenbereich der Innenteile (2) auf eine erhöhte Verarbeitungstemperatur, insbesondere im Bereich von 120°C bis 250°C, erwärmt wird und/oder
- **dass** als Kunststoff des Innenteils (2) ein haftungsmodifizierter Kunststoff verwendet wird.
